(19) **Europäisches Patentamt European Patent Office Office européen des brevets**

(11) **EP 4 738 457 A1**

(12) **EUROPEAN PATENT APPLICATION**
published in accordance with Art. 153(4) EPC

(43) Date of publication:
06.05.2026 Bulletin 2026/19

(21) Application number: 24832436.0

(22) Date of filing: 26.06.2024

(51) International Patent Classification (IPC):
$H01M\ 4/36\ ^{(2006.01)}$      $H01M\ 4/525\ ^{(2010.01)}$
$H01M\ 4/505\ ^{(2010.01)}$     $H01M\ 4/131\ ^{(2010.01)}$
$H01M\ 10/052\ ^{(2010.01)}$    $H01M\ 4/02\ ^{(2006.01)}$

(52) Cooperative Patent Classification (CPC):
Y02E 60/10

(86) International application number:
PCT/KR2024/008909

(87) International publication number:
WO 2025/005658 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.06.2023 KR 20230082785

(71) Applicant: Posco Future M Co., Ltd.
Pohang-si, Gyeongsangbuk-do 37918 (KR)

(72) Inventors:
• LEE, Subin
  Pohang-si, Gyeongsangbuk-do 37918 (KR)

• MYUNG, Minhoon
  Pohang-si, Gyeongsangbuk-do 37918 (KR)
• SIM, Sung Keun
  Pohang-si, Gyeongsangbuk-do 37918 (KR)
• LEE, Seungwon
  Pohang-si, Gyeongsangbuk-do 37918 (KR)
• CHOI, Kwonyoung
  Pohang-si, Gyeongsangbuk-do 37918 (KR)

(74) Representative: Meissner Bolte Partnerschaft
mbB
Patentanwälte Rechtsanwälte
Postfach 86 06 24
81633 München (DE)

(54) **CATHODE ACTIVE MATERIAL FOR LITHIUM SECONDARY BATTERY. AND LITHIUM SECONDARY BATTERY COMPRISING SAME**

(57)    The present embodiments relate to a positive electrode active material for a lithium secondary battery and a lithium secondary battery comprising the same. The positive electrode active material for a lithium secondary battery according to one embodiment includes a nickel-containing metal oxide in a single-particle form; dopant elements doped into the nickel-containing metal oxide; and a coating layer disposed on a surface of the nickel-containing metal oxide, wherein the dopant elements comprise three or more kinds, and the coating layer may comprise two or more coating elements.

EP 4 738 457 A1

## Description

[Technical Field]

The present embodiments relate to a positive electrode active material for a lithium secondary battery and a lithium secondary battery comprising the same.

[Background Art]

In recent years, driven by the explosive demand for electric vehicles and the need for extended driving ranges, the development of secondary batteries having high capacity and high energy density has been actively pursued worldwide. In particular, high-nickel NCM positive electrode materials, which contain a high nickel content, have been utilized to meet such demands.

However, as the nickel content increases, the particle strength deteriorates, resulting in the generation of microcracks during charge and discharge. In addition, due to such microcracks, the specific surface area of the positive electrode material increases, thereby accelerating reactions with the electrolyte and causing an increase in gas generation. Moreover, due to structural instability, unstable $Ni^{3+}$ is reduced to stable $Ni^{2+}$ and is further converted into stable NiO, thereby increasing cation mixing. Accordingly, it is difficult to practically apply such materials as positive electrode active materials for lithium-ion batteries for use in electric vehicles or energy storage.

To address these issues, an approach has been proposed in which a positive electrode material is prepared in a single-particle form by maximizing the size of primary particles, rather than utilizing a multi-particle structure in which primary particles are aggregated into secondary particles.

However, in general, manufacturing a positive electrode material in a single-particle form requires calcination at a higher temperature than that used for multi-particle structures, and in this process, under-sintering or over-sintering commonly occurs, resulting in layered-structure crystal defects that degrade electrochemical properties such as capacity and output. Moreover, when the calcination temperature is lowered to prevent such issues, the crystal grain size within a single particle does not grow sufficiently, leading to deterioration in particle strength and lifespan characteristics.

[Detailed Description of the Invention]

[Technical Problem]

The present embodiments are directed to providing a positive electrode active material for a lithium secondary battery, and a lithium secondary battery including the same, which exhibit excellent electrochemical characteristics and improved lifespan and resistance properties.

[Technical Solution]

A positive electrode active material for a lithium secondary battery according to one embodiment includes a nickel-containing metal oxide in a single-particle form; dopant elements doped into the nickel-containing metal oxide; and a coating layer disposed on a surface of the nickel-containing metal oxide, wherein the dopant elements comprise three or more kinds, and the coating layer may comprise two or more coating elements.

In another embodiment, a lithium secondary battery may include a positive electrode comprising the positive electrode active material for a lithium secondary battery according to the aforementioned embodiment.

[Effects of the Invention]

According to the present embodiments, by including at least three kinds of dopant elements in the nickel-containing metal oxide in a single-particle form and including a coating layer disposed on the surface of the nickel-containing metal oxide and comprising at least two kinds of coating elements, it is possible to stabilize the crystal structure and simultaneously improve particle strength.

Accordingly, the present embodiments enable the realization of a positive electrode active material that is in a single-particle form while exhibiting excellent electrochemical characteristics as well as improved lifespan and resistance properties.

In addition, when the positive electrode active material according to the present embodiments is applied, an electrode of superior quality can be manufactured.

[Best Mode for Carrying Out the Invention]

The terms such as first, second, and third are used to describe various parts, components, regions, layers, and/or sections, but are not limited thereto. These terms are used only to distinguish one part, component, region, layer, or section from another part, component, region, layer, or section. Thus, a first part, component, region, layer, or section described below may be referred to as a second part, component, region, layer, or section without departing from the scope of the present invention.

The terminology used herein is intended only to describe particular embodiments and is not intended to limit the present invention. The singular forms used herein include plural forms as well unless the context clearly indicates otherwise. The term "comprising/including/containing" as used in the specification, specifies the presence of stated features, regions, integers, steps, operations, elements, and/or components but does not preclude the presence or addition of one or more other features, regions, integers, steps, operations, elements, and/or components.

When a part is described as being "on" or "over/above" another part, it may be directly on or over the other part, or intervening parts may be present therebetween. In contrast, when a part is described as being "directly on" or "directly over/above" another part, no intervening part is present therebetween.

Unless otherwise defined, all terms used herein, including technical and scientific terms, have the same meanings as commonly understood by a person of ordinary skill in the art to which the present invention pertains. Terms defined in generally-used dictionaries shall be interpreted as having meanings consistent with the relevant technical literature and the present disclosure, and shall not be interpreted in an idealized or overly formal sense unless explicitly defined otherwise.

Further, unless otherwise stated, % refers to weight percent, and 1 ppm means 0.0001 weight percent.

In the present specification, the phrase "combinations thereof" used in a Markush group refers to mixtures or combinations of one or more components selected from the group, meaning that one or more of the components selected from the group may be included.

Hereinafter, embodiments of the present invention will be described in detail so that a person skilled in the art can readily carry out the invention. However, the present invention may be embodied in various different forms and is not limited to the embodiments described herein.

## Positive Electrode Active Material for a Lithium Secondary Battery

As described above, a positive electrode active material in a single-particle form may undergo under-sintering, resulting in defects in the layered crystal structure, or may exhibit reduced particle strength, which leads to deterioration in high-temperature lifespan characteristics and resistance characteristics.

However, in the present embodiments, such issues were addressed by doping the metal oxide with at least three kinds of dopant elements and forming a coating layer comprising two or more coating elements.

Specifically, a positive electrode active material for a lithium secondary battery according to one embodiment includes a nickel-containing metal oxide in a single-particle form; dopant elements doped into the nickel-containing metal oxide; and a coating layer disposed on a surface of the nickel-containing metal oxide, wherein the dopant elements comprise three or more kinds, and the coating layer may comprise two or more coating elements.

In the present specification, a "single particle" may include at least one selected from a single-crystal structure formed as a single particle; and a structure distinguishable as a single lump when observing a cross-section of a powder through scanning electron microscopy (SEM), in which approximately 2 to 20 particles, or 2 to 10 particles, are aggregated. Here, a "particle" refers to a grain or crystallite forming one crystal grain.

A positive electrode active material in a single-particle form, as in the present embodiments, has a smaller specific surface area compared to a conventional positive electrode active material in a secondary-particle form in which dozens to hundreds of primary particles are aggregated. Accordingly, gas generation from side reactions with the electrolyte can be reduced, particle strength can be increased to suppress particle breakage during rolling, and crack formation during repeated charging and discharging can be reduced. Thus, compared with secondary particles, lifespan and safety characteristics are excellent, and a high energy density per volume can be realized.

However, as described above, a positive electrode active material in a single-particle form is generally manufactured by performing calcination at a higher temperature than a positive electrode active material in a secondary-particle form. At such time, under-sintering or over-sintering frequently occurs, which can cause defects in the layered structure.

In the present embodiments, by doping the nickel-containing metal oxide with at least three dopant elements including Al, Y, and Zr, and forming a coating layer using at least two coating elements including Co and Al, crystal defects such as an increase in cation mixing caused by high-temperature calcination can be prevented, and the crystal grain size inside the single particle and the average particle diameter of the single particle can be efficiently increased during the calcination process.

In the present specification, "crystal grain" refers to a distinguishable region in which atoms form a lattice structure in a certain orientation within a primary particle.

In the positive electrode active material having the coating layer, the amount of Co may be from 0.035 mol to 0.08 mol, and more specifically from 0.05 mol to 0.07 mol, based on a total of 1 mol of transition metals included in the nickel-containing metal oxide having the coating layer. When the amount of Co satisfies the above range, crystal grains can grow to a proper size, production cost can be appropriately controlled, and excellent economic benefits can be achieved.

The amount of Al in the positive electrode active material having the coating layer may be from 0.001 mol to 0.015 mol based on 1 mol of transition metals included in the nickel-containing metal oxide having the coating layer, and more specifically from 0.003 mol to 0.012 mol, or from 0.005 mol to 0.009 mol. When the amount of Al satisfies the above range, degradation of the layered structure into a spinel structure can be effectively suppressed. Since lithium-ion deintercalation and intercalation are easy in a layered structure but not in a spinel structure, suppressing the structural transformation from layered to spinel enables smooth lithium-ion migration, thereby improving the electrochemical characteristics of the battery.

The amount of Y may be from 400 ppm to 2,000 ppm, and more specifically from 700 ppm to 1,700 ppm, based on the total weight of the nickel-containing metal oxide having the coating layer. When the amount of Y satisfies the above range, crystal growth can be promoted, thereby efficiently increasing the crystal grain size inside the single particle and the average particle diameter.

The amount of Zr may be from 1,200 ppm to 2,800 ppm, and more specifically from 1,500 ppm to 2,500 ppm, based on the total weight of the nickel-containing metal oxide having the coating layer. When the amount of Zr satisfies the above range, contraction of lithium-ion pathways during charging and discharging can be alleviated, resulting in stabilization of the layered structure. Accordingly, the cation mixing ratio can be reduced, and resistance characteristics and lifespan characteristics can be improved.

Meanwhile, the amount of nickel in the nickel-containing metal oxide may be 0.8 mol or more, and more specifically from 0.8 mol to 0.99 mol, from 0.82 mol to 0.95 mol, or from 0.82 mol to 0.93 mol, based on 1 mol of transition metals included in the doped nickel-containing metal oxide. When the nickel amount satisfies the above range, a high-capacity battery can be realized.

The nickel-containing metal oxide may further include manganese, and the amount of manganese may be 0.15 mol or less, and more specifically from 0.05 mol to 0.1 mol, based on a total of 1 mol of transition metals included in the nickel-containing metal oxide having the coating layer. When the manganese amount satisfies the above range, the stability of the positive electrode active material can be improved, thereby improving battery stability.

The nickel-containing metal oxide having the coating layer may be represented by Formula 1 below:

[Formula 1]     $Li_a[Ni_xCo_yMn_zM_{1w_1}M_{2w_2}]O_2$

In Formula 1, $0.8 \leq a \leq 1.2$, $0.8 \leq x \leq 0.99$, $0 < y \leq 0.06$, $0 < z \leq 0.14$, $0 < w_1 \leq 0.1$, $0 \leq w_2 \leq 0.1$, and $x + y + z + w_1 + w_2 = 1$; $M_1$ comprises Al, Y, and Zr; and $M_2$ comprises one or more selected from B, Al, Mg, Ti, Nb, W, Sc, Si, V, Fe, Y, Mo, Ce, Hf, Ta, La, and Sr.

The total amount of dopant elements $M_1$ and $M_2$ in Formula 1 may be greater than 0 and 0.2 mol or less, and more specifically from 0.0005 mol to 0.1 mol, 0.0005 mol to 0.08 mol, 0.0005 mol to 0.04 mol, or 0.001 mol to 0.03 mol, based on a total of 1 mol of nickel, cobalt, manganese, and dopant elements. In Formula 1, the dopant element content refers to the doping amount of dopant elements included in the final obtained positive electrode active material.

The average particle diameter (D50) of the positive electrode active material according to the present embodiments may be 3 μm or more, and more specifically from 3 μm to 6 μm. When the average particle diameter of the single-particle positive electrode active material satisfies the above range, a lithium secondary battery with excellent electrochemical characteristics, such as lifespan characteristics and resistance-increase characteristics, can be realized. Furthermore, since the energy density per volume can also be increased, highly advantageous effects can be obtained.

The positive electrode active material may have a moisture increase rate of 80% or less at a temperature of 25 ± 3°C and a relative humidity of 50 ± 15%. In addition, the positive electrode active material may have a residual-lithium increase rate of 20% or less at a temperature of 25 ± 3°C and a relative humidity of 50 ± 15%. Since the coating layer including two kinds of elements is disposed on the surface of the nickel-containing metal oxide in the present embodiments, the moisture increase rate and residual-lithium increase rate can be significantly reduced. Accordingly, a positive electrode active material exhibiting excellent high-temperature lifespan and resistance characteristics can be realized.

Further, the crystal grain size of the nickel-containing metal oxide having the coating layer may be 200 nm or more, and more specifically from 200 nm to 250 nm. When the crystal grain size satisfies the above range, both lifespan characteristics and electrochemical characteristics can be improved in the positive electrode active material of the present embodiments.

## Positive Electrode

In another embodiment, a positive electrode includes a current collector and a positive electrode active material layer disposed on one surface of the current collector, wherein the positive electrode active material layer includes the positive electrode active material according to the aforementioned embodiment.

The characteristics of the positive electrode active material constituting the positive electrode active material layer are as described above, and thus, detailed descriptions thereof will be omitted.

The current collector may be, for example, stainless steel, aluminum, nickel, titanium, sintered carbon, or aluminum or stainless steel surface-treated with carbon, nickel, titanium, or silver.

The positive electrode active material layer may include a binder and a conductive material.

The binder serves to enhance adhesion between the positive electrode active material particles and between the positive electrode active material and the current collector. Examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, and various copolymers thereof. One or more may be used. The binder may be included in an amount of 1 to 30 wt% based on the total weight of the positive electrode active material layer.

The conductive material imparts conductivity to the electrode, and any electronic conductive material that does not cause chemical changes in the battery may be used without limitation. Examples include graphite such as natural graphite or artificial graphite; carbon-based materials such as carbon black, acetylene black, ketjen black, channel black, furnace black, lamp black, thermal black, and carbon fibers; metal powders or fibers such as copper, nickel, aluminum, or silver; conductive whiskers such as zinc oxide or potassium titanate; conductive metal oxides such as titanium oxide; or conductive polymers such as polyphenylene derivatives. One or more may be used. The conductive material may be included in an amount of 1 to 30 wt% based on the total weight of the positive electrode active material layer.

The positive electrode may be manufactured according to a conventional positive electrode manufacturing method, except that the positive electrode active material described above is used.

Specifically, the positive electrode may be manufactured by applying a composition for forming the positive electrode active material layer-comprising the aforementioned positive electrode active material and, optionally, a binder, conductive material, or solvent-onto the positive electrode current collector, and then drying and rolling it. The types and amounts of the positive electrode active material, binder, and conductive material are as described above.

The solvent may be any solvent commonly used in the art, such as dimethyl sulfoxide (DMSO), isopropyl alcohol, N-methyl-2-pyrrolidone (NMP), acetone, or water. One or more may be used. The amount of the solvent should be sufficient to dissolve or disperse the positive electrode active material, conductive material, and binder in consideration of slurry coating thickness and manufacturing yield, and to have a viscosity suitable for providing excellent coating uniformity during electrode fabrication.

Alternatively, the positive electrode may be manufactured by casting the composition for forming the positive electrode active material layer onto a separate support, followed by peeling the resulting film from the support and laminating it onto the positive electrode current collector.

## Lithium Secondary Battery

In another embodiment, a lithium secondary battery including the positive electrode described above is provided.

The lithium secondary battery may specifically include a positive electrode, a negative electrode disposed opposite the positive electrode, a separator interposed between the positive electrode and the negative electrode, and an electrolyte, and the positive electrode is as described above. In addition, the lithium secondary battery may optionally further include a battery case accommodating an electrode assembly including the positive electrode, the negative electrode, and the separator, and a sealing member sealing the battery case.

In the lithium secondary battery, the negative electrode may include a negative electrode current collector and a negative electrode active material layer disposed on the negative electrode current collector.

The negative electrode current collector is not particularly limited as long as it has high conductivity without causing chemical changes in the battery; examples include copper, stainless steel, aluminum, nickel, titanium, sintered carbon, copper or stainless steel surface-treated with carbon, nickel, titanium, or silver, and aluminum-cadmium alloys. The negative electrode current collector may typically have a thickness of 3 to 500 $\mu$m, and as with the positive electrode current collector, fine surface irregularities may be formed on the surface to enhance adhesion of the negative electrode active material. It may be used in various forms such as films, sheets, foils, nets, porous bodies, foams, or non-woven fabrics.

The negative electrode active material layer may include a negative electrode active material, and optionally, a binder and a conductive material. For example, the negative electrode active material layer may be manufactured by applying onto the negative electrode current collector a composition for forming the negative electrode active material layer comprising the negative electrode active material and, optionally, a binder and a conductive material, followed by drying; or by casting the composition for forming the negative electrode active material layer onto a separate support, peeling a film obtained therefrom, and laminating the film onto the negative electrode current collector.

The negative electrode active material may be a compound capable of reversibly intercalating and deintercalating lithium. Specific examples include carbon-based materials such as artificial graphite, natural graphite, graphitized carbon fibers, and amorphous carbon; metal-based compounds capable of alloying with lithium such as Si, Al, Sn, Pb, Zn, Bi, In, Mg, Ga, Cd, Si alloys, Sn alloys, or Al alloys; metal oxides capable of lithium doping and dedoping such as $SiO\beta$ ($0 < \beta$ < 2), $SnO_2$, vanadium oxides, or lithium vanadium oxides; or composites such as SiC composites and Sn-C composites comprising the metal-based compound and the carbon-based material. One or more of these may be used. Further, a metal lithium thin film may also be used as the negative electrode active material. Both low-crystallinity carbon and high-crystallinity carbon may be used as carbon materials. Typical low-crystallinity carbons include soft carbon and hard carbon, and typical high-crystallinity carbons include amorphous, plate-like, flake-like, spherical, or fibrous natural or artificial graphite; Kish graphite; pyrolytic carbon; mesophase pitch-based carbon fiber; meso-carbon microbeads; mesophase pitches; and petroleum or coal tar pitch-derived cokes.

The binder and the conductive material may be the same as described above for the positive electrode.

Next, depending on the type of lithium secondary battery, a separator may be present between the positive electrode and the negative electrode. As such a separator, polyethylene, polypropylene, polyvinylidene fluoride, or a multilayer membrane of two or more layers thereof may be used, and mixed multilayer membranes such as polyethylene/polypropylene two-layer separators, polyethylene/polypropylene/polyethylene three-layer separators, or polypropylene/polyethylene/polypropylene three-layer separators may also be used.

In addition, in the lithium secondary battery, the electrolyte may include an organic liquid electrolyte, an inorganic liquid electrolyte, a solid polymer electrolyte, a gel-type polymer electrolyte, a solid inorganic electrolyte, or a molten inorganic electrolyte, all of which may be used in manufacturing a lithium secondary battery, but are not limited thereto.

Specifically, the organic liquid electrolyte may include an organic solvent and a lithium salt.

The organic solvent may be any solvent capable of serving as a medium in which ions involved in the electrochemical reaction of the battery can move. Specific examples include ester-based solvents such as methyl acetate, ethyl acetate, $\gamma$-butyrolactone, and $\varepsilon$-caprolactone; ether-based solvents such as dibutyl ether and tetrahydrofuran; ketone-based solvents such as cyclohexanone; aromatic hydrocarbon solvents such as benzene and fluorobenzene; carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC); alcohol-based solvents such as ethanol and isopropyl alcohol; nitriles such as R-CN (where R is a $C_2$ to $C_{20}$ linear, branched, or cyclic hydrocarbon group, optionally comprising a double-bonded aromatic ring or an ether linkage); amides such as dimethylformamide; dioxolanes such as 1,3-dioxolane; and sulfolanes. Among these, carbonate-based solvents are preferred, and it is more preferable to use a mixture of a cyclic carbonate having high ionic conductivity and high dielectric constant, capable of improving charge/discharge performance (e.g., ethylene carbonate or propylene carbonate), and a linear carbonate compound having low viscosity (e.g., ethylmethyl carbonate, dimethyl carbonate, or diethyl carbonate). In such a case, the cyclic carbonate and the linear carbonate may be mixed at a volume ratio of about 1:1 to about 1:9 to exhibit excellent electrolyte performance.

The lithium salt may be any compound capable of providing lithium ions used in a lithium secondary battery. Specific examples include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, and $LiB(C_2O_4)_2$. The concentration of the lithium salt is preferably within the range of 0.1 to 2.0 M. When the lithium salt concentration is within this range, the electrolyte can have appropriate conductivity and viscosity, exhibit excellent electrolyte performance, and allow lithium ions to move effectively.

As described above, the lithium secondary battery including the positive electrode active material according to the present invention exhibits excellent discharge capacity, output characteristics, and capacity retention, and is therefore useful for portable devices such as mobile phones, notebook computers, and digital cameras, as well as electric vehicle applications such as hybrid electric vehicles (HEVs).

[Best Mode for Carrying Out the Invention]

Hereinafter, exemplary embodiments of the present invention will be described in detail. However, these are provided merely as examples, and the present invention is not limited thereto and is defined only by the scope of the claims described below.

**Example 1**

**(1) Preparation of the Positive Electrode Active Material**

A precursor having a composition of $Ni_{0.90}Co_{0.03}Mn_{0.07}(OH)_2$ was prepared, and $LiOH \cdot H_2O$ (Samjeon Chemical, battery grade) was used as a lithium raw material and $Y_2O_3$, $ZrO_2$, and $Al(OH)_3$ were used as dopant raw materials. These materials were uniformly mixed with the precursor to prepare a mixture.

At this time, the molar ratio of lithium (Li) to the total metal components except lithium (Me), i.e., Li/Me, was designed to be 1.05, and the dopant raw materials were added such that, based on the precursor, Zr was 2000 ppm, Y was 1200 ppm, and Al was 1000 ppm.

The mixture was introduced into a calcination furnace under an oxygen atmosphere and pre-calcined at 680°C for 6.5 hours to obtain a pre-calcined product. Then, the pre-calcined product was introduced again into a calcination furnace under an oxygen atmosphere and calcined in a three-step process: calcination at 890°C for 3 hours (1st step), followed by calcination at 940°C for 1 hour (2nd step), and finally at 780°C for 11 hours (3rd step), thereby obtaining a calcined material.

The calcined material was pulverized to obtain a single-particle metal oxide doped with Al, Y, and Zr.

$Co(OH)_2$ and $Al(OH)_3$ were then dry-mixed with the obtained single-particle metal oxide as coating raw materials, and the mixture was heat-treated at 700°C for 5 hours under an oxygen atmosphere to form a coating layer, thereby preparing a positive electrode active material. At this time, $Co(OH)_2$ and $Al(OH)_3$ were added such that, based on the single-particle metal oxide, the Co content corresponded to 2.5 mol% and the Al content corresponded to 1000 ppm.

**(2) Manufacture of Mono-Cell**

A mono-cell was manufactured using the positive electrode active material prepared in step (1) as follows.

Specifically, the positive electrode active material, conductive material (acetylene black), and a polyvinylidene fluoride binder (product name: KF1120) were mixed at a weight ratio of 96.5 : 1.5 : 2. The mixture was added to N-methyl-2-pyrrolidone (NMP) such that the solid content became approximately 30 wt%, thereby preparing a positive electrode active material slurry.

The slurry was coated onto an aluminum foil (Al foil, thickness: 15 $\mu$m) as a positive electrode current collector using a doctor blade, dried, and then rolled to prepare a positive electrode. The loading amount of the positive electrode was approximately 15-16 mg/cm$^2$, and the rolling density was approximately 3.5 g/cm$^3$.

A mono-cell was manufactured in a conventional manner using the positive electrode, a graphite negative electrode, an electrolyte, and a polypropylene separator. The electrolyte was prepared by dissolving 0.7 M $LiPF_6$ and 0.3 M LiFSI in a mixed solvent of ethylene carbonate (EC) and ethylmethyl carbonate (EMC) (volume mixing ratio EC:EMC = 3:7).

**Comparative Example 1**

Except that no coating layer was formed, a single-particle positive electrode active material was prepared in the same manner as in Example 1.

**Experimental Example 1 - Measurement of Capacity Retention**

A formation cycle was performed at 45°C under constant-current charge/discharge of 0.1C/0.1C within a voltage range of 2.5-4.25 V. Thereafter, constant-current charge/discharge testing was performed at 0.5C/1C. Capacity retention was calculated based on the capacity measured every 50 cycles from the 50th cycle to the 700th cycle relative to the first-cycle capacity. The results are shown in Table 1 below.

**Experimental Example 2** - **Measurement of Resistance Increase Rate**

The resistance increase rate was calculated as the percentage increase in resistance measured every 50 cycles from the 50th to the 700th cycle relative to the resistance measured during the first 0.5C charge / 1.0C discharge at high temperature (45°C).

The resistance (direct current internal resistance: DC-IR) was calculated by measuring the voltage 60 seconds after applying a discharge current at a charged state of 4.25 V, and applying the formula:

(voltage before current application - voltage 60 seconds after current application)/ applied current

The results are shown in Table 1 below.

[Table 1]

| Cycle | Cap. retention [%] | | ΔDCIR [%] | |
|---|---|---|---|---|
| | Example 1 | Comparative Ex. 1 | Example 1 | Comparative Ex. 1 |
| 50 | 97.7 | 97.8 | 3.9 | 5.7 |
| 100 | 96.3 | 96.6 | 7.6 | 10.9 |
| 150 | 94.9 | 95.3 | 11.2 | 15.7 |
| 200 | 93.7 | 94.2 | 13.6 | 20.0 |
| 250 | 93.1 | 93.2 | 15.5 | 24.9 |
| 300 | 92.0 | 92.1 | 19.2 | 29.5 |
| 350 | 91.1 | 91.4 | 22.2 | 35.2 |
| 400 | 89.9 | 90.3 | 26.0 | 40.7 |
| 450 | 88.8 | 88.9 | 30.9 | 47.8 |
| 500 | 87.7 | 87.6 | 34.7 | 53.7 |
| 550 | 86.8 | 85.9 | 39.2 | 63.2 |
| 600 | 85.9 | 84.6 | 43.8 | 69.8 |
| 650 | 84.8 | 83.9 | 49.2 | 73.9 |
| 700 | 83.8 | 82.5 | 54.2 | 82.3 |

Referring to Table 1, it can be confirmed that the positive electrode active material according to Example 1 exhibits superior capacity retention and resistance characteristics compared to the positive electrode active material according to Comparative Example 1, even as the number of cycles increases.

**Experimental Example 3** - **Measurement of Residual Lithium Variation**

For the positive electrode active materials prepared according to Example 1 and Comparative Example 1, the variation in residual lithium was measured. Specifically, 5 g of each positive electrode active material was added to 100 mL of pure water, stirred, and then vacuum-filtered to obtain a solution. The obtained solution was analyzed using an Autotitrator T5 (METTLER). The residual lithium values were calculated using the following formulas:

$$LiOH = ((VEQ1 + VEQ2) - 2 \times VEQ2) \times C \times Mw \times 1000 / M$$

$$Li_2CO_3 = VEQ2 \times C \times Mw \times 1000 / M$$

where:

VEQ1: consumption (mL) of 0.1 N HCl at the point of equivalence VEQ1
VEQ2: consumption (mL) of 0.1 N HCl from VEQ1 to VEQ2
C: concentration of HCl (N), which is 0.1 N
M: (sample weight $\times$ solution weight) / DI water weight
Mw: molecular weight - $Li_2CO_3$: 73.89 g/mol, LiOH: 23.94 g/mol

TTL is a value representing only the amount of lithium (Li) among the residual lithium species present on the surface of the positive electrode active material, and was calculated according to the following equation:

TTL = (LiOH result $\times$ (Li molar mass / LiOH molar mass)) + ($Li_2CO_3$ result $\times$ (2 $\times$ Li molar mass / $Li_2CO_3$ molar mass))

The results are shown in Table 2 below.

8

[Table 2]

| Residual Lithium | LiOH (wt%) | $Li_2CO_3$ (wt%) | Total (wt%) | TTL (ppm) |
|---|---|---|---|---|
| Example 1 | 0.1090 | 0.1781 | 0.2871 | 650.2 |
| Comparative Ex. 1 | 0.4001 | 0.3193 | 0.7194 | 1758.9 |

Referring to Table 2, it can be confirmed that the residual lithium of Example 1, which includes a coating layer, is reduced by 55% or more compared to that of Comparative Example 1, which does not include a coating layer. From this, it can be understood that the residual lithium remaining on the surface of the positive electrode active material reacted with the coating elements, resulting in a reduction of the residual lithium.

**Experimental Example 4 - Measurement of Time-Dependent Variation in Residual Lithium**

For the positive electrode active materials prepared according to Example 1 and Comparative Example 1, the time-dependent variation in residual lithium was measured. Specifically, the positive electrode active materials obtained in Experimental Example 3 were stored at a temperature of 25 ± 3°C and a relative humidity of 50 ± 15%, and the residual lithium was analyzed according to the storage time.
The results are shown in Table 3 below.

[Table 3]

| Time-dependent variation of residual lithium | R-Li | 0 min | 30 min | 60 min | 120 min |
|---|---|---|---|---|---|
| Example 1 | LiOH (wt%) | 0.0900 | 0.0624 | 0.0448 | 0.0389 |
| | $Li_2CO_3$ (wt%) | 0.2151 | 0.2635 | 0.2952 | 0.3189 |
| | Total (wt%) | 0.3051 | 0.3259 | 0.3400 | 0.3578 |
| Comparative Ex. 1 | LiOH (wt%) | 0.2387 | 0.1881 | 0.1799 | 0.1283 |
| | $Li_2CO_3$ (wt%) | 0.4499 | 0.5238 | 0.5893 | 0.7385 |
| | Total (wt%) | 0.6886 | 0.7119 | 0.7692 | 0.8668 |

Referring to Table 3, it can be seen that the positive electrode active material of Example 1 exhibits a lower increase rate of residual lithium over time compared to the positive electrode active material of Comparative Example 1. Accordingly, it can be confirmed that the surface stability of the positive electrode active material was improved through the coating.

**Experimental Example 5 - Measurement of Time-Dependent Variation in Moisture**

For the positive electrode active materials prepared according to Example 1 and Comparative Example 1, the time-dependent variation in moisture was measured. Specifically, the positive electrode active materials were stored at a temperature of 25 ± 3°C and a relative humidity of 50 ± 15%, and the moisture content was analyzed according to the storage time.
The moisture content was analyzed using an 851KF (Metrohm) instrument under the following conditions:

Measurement temperature: 200°C
Stirrer rate: 8
Flow rate: 60 mL/min
Blank condition: blank sample size 1 g

The results are shown in Table 4 below.

[Table 4]

| Time-dependent moisture behavior | 0 min | 5 min | 10 min | 30 min |
|---|---|---|---|---|
| Example 1 | 465.5 ppm | 676.4 ppm | 732.8 ppm | 775.2 ppm |
| Comparative Ex. 1 | 592.3 ppm | 884.7 ppm | 1023.6 ppm | 1280.4 ppm |

Referring to Table 4, it can be seen that the positive electrode active material of Example 1 exhibits a significantly lower increase rate in moisture over time compared to the positive electrode active material of Comparative Example 1. Accordingly, it can be confirmed that the surface stability of the positive electrode active material was improved through the coating.

**Experimental Example** 6 - **Measurement of Crystal Grain Size**

For the positive electrode active materials prepared according to Example 1 and Comparative Example 1, the crystal grain size, c-axis value, and a-axis value were measured as described below. The results are shown in Table 5.

1. Structural analysis of the samples was performed using a SmartLab instrument (Rigaku).
2. Configuration of the SmartLab instrument:

- Goniometer radius: 300.0 mm
- Rotating anode X-ray tube (DPTA-II)
- Theta_s arm: BB slit
- CBO (cross-beam optics for Cu target)
- Soller slit: 5.0°; 10 mm incident slit
- Theta_d arm: 8.0 mm receiving slit
- Diffracted beam monochromator (DBM) unit for D/teX Ultra detector
- Sample stage: ASC-6 (auto sample changer), reflection knife edge

3. To generate X-rays, 45 kV and 200 mA (9 kW) were applied to the Cu anode.
4. Instrument optics were set to an incident slit of 1/2° and a receiving slit of 8.0 mm.
5. XRD measurements were performed over a scan range of 10-80°, with a step size of 0.02°, at a scan speed of 10°/min.
6. The crystal grain size was calculated using Rigaku SmartLab Studio II x64 v4.2.82.0 software.
7. The calculation was performed using the WPPF (Whole Powder Pattern Fitting) method within the software.

[Table 5]

| Sample | Crystal size |
|---|---|
| Example 1 | 228 nm |
| Comparative Ex. 1 | 195 nm |

Referring to Table 5, it can be confirmed that the crystal grain size of the positive electrode active material prepared according to Example 1 is 200 nm or more, whereas the crystal grain size of the positive electrode active material prepared according to Comparative Example 1 is less than 200 nm.

The present invention is not limited to the embodiments described above, but may be implemented in various different forms. It will be understood by those skilled in the art that the invention may be carried out in other specific forms without departing from the technical spirit or essential characteristics of the present invention. Therefore, the embodiments described above are to be regarded as illustrative in all respects, rather than restrictive.

**Claims**

1.  A positive electrode active material for a lithium secondary battery, comprising:

    a nickel-containing metal oxide in a single-particle form;
    dopant elements doped into the nickel-containing metal oxide; and
    a coating layer disposed on a surface of the nickel-containing metal oxide,
    wherein the dopant elements comprise three or more kinds, and
    wherein the coating layer comprises two or more coating elements.

2.  The positive electrode active material of claim 1, wherein the coating layer comprises Co and Al.

3. The positive electrode active material of claim 2, wherein an amount of Co in the positive electrode active material having the coating layer is from 0.035 mol to 0.08 mol based on a total of 1 mol of transition metals included in the nickel-containing metal oxide having the coating layer.

4. The positive electrode active material of claim 2, wherein the dopant elements comprise Al, Y, and Zr.

5. The positive electrode active material of claim 4, wherein an amount of Al in the positive electrode active material having the coating layer is from 0.001 mol to 0.015 mol based on a total of 1 mol of transition metals included in the nickel-containing metal oxide having the coating layer.

6. The positive electrode active material of claim 4, wherein an amount of Y is from 400 ppm to 2,000 ppm based on a total weight of the nickel-containing metal oxide having the coating layer.

7. The positive electrode active material of claim 4, wherein an amount of Zr is from 1,200 ppm to 2,800 ppm based on a total weight of the nickel-containing metal oxide having the coating layer.

8. The positive electrode active material of claim 1, wherein an amount of nickel is 0.8 mol or more based on a total of 1 mol of transition metals included in the nickel-containing metal oxide having the coating layer.

9. The positive electrode active material of claim 8, wherein the nickel-containing metal oxide further comprises manganese, and wherein an amount of the manganese is 0.15 mol or less based on a total of 1 mol of transition metals included in the nickel-containing metal oxide having the coating layer.

10. The positive electrode active material of claim 1, wherein the nickel-containing metal oxide having the coating layer is represented by Formula 1 below:

[Formula 1] $\quad Li_a[Ni_xCo_yMn_zM_{1w_1}M_{2w_2}]O_2$

wherein $0.8 \le a \le 1.2$, $0.8 \le x \le 0.99$, $0 < y \le 0.06$, $0 < z \le 0.14$, $0 < w_1 \le 0.1$, $0 \le w_2 \le 0.1$, and $x + y + z + w_1 + w_2 = 1$;
wherein $M_1$ comprises Al, Y, and Zr; and
wherein $M_2$ comprises one or more selected from B, Al, Mg, Ti, Nb, W, Sc, Si, V, Fe, Y, Mo, Ce, Hf, Ta, La, and Sr.

11. The positive electrode active material of claim 1, wherein the positive electrode active material has a moisture increase rate of 80% or less at a temperature of $25 \pm 3°C$ and a relative humidity of $50 \pm 15\%$.

12. The positive electrode active material of claim 1, wherein the positive electrode active material has a residual-lithium increase rate of 20% or less at a temperature of $25 \pm 3°C$ and a relative humidity of $50 \pm 15\%$.

13. The positive electrode active material of claim 1, wherein the positive electrode active material having the coating layer has a residual-lithium reduction rate of 55% or more relative to the doped nickel-containing metal oxide.

14. The positive electrode active material of claim 1, wherein an average particle diameter (D50) of the positive electrode active material is 3 $\mu$m or more.

15. The positive electrode active material of claim 1, wherein a crystal grain size of the nickel-containing metal oxide having the coating layer is 200 nm or more.

16. A positive electrode for a lithium secondary battery comprising the positive electrode active material of any one of claims 1 to 15.

17. A lithium secondary battery comprising the positive electrode of claim 16.

**EP 4 738 457 A1**

## INTERNATIONAL SEARCH REPORT

| | International application No. |
|---|---|
| | **PCT/KR2024/008909** |

| | |
|---|---|
| **A.** | **CLASSIFICATION OF SUBJECT MATTER** |
| | **H01M 4/36**(2006.01)i; **H01M 4/525**(2010.01)i; **H01M 4/505**(2010.01)i; **H01M 4/131**(2010.01)i; **H01M 10/052**(2010.01)i; **H01M 4/02**(2006.01)i |
| | According to International Patent Classification (IPC) or to both national classification and IPC |

| | |
|---|---|
| **B.** | **FIELDS SEARCHED** |
| | Minimum documentation searched (classification system followed by classification symbols) |
| | H01M 4/36(2006.01); H01M 10/052(2010.01); H01M 10/0525(2010.01); H01M 4/485(2010.01); H01M 4/505(2010.01); H01M 4/525(2010.01) |
| | Documentation searched other than minimum documentation to the extent that such documents are included in the fields searched |
| | Korean utility models and applications for utility models: IPC as above<br>Japanese utility models and applications for utility models: IPC as above |
| | Electronic data base consulted during the international search (name of data base and, where practicable, search terms used) |
| | eKOMPASS (KIPO internal) & keywords: 양극(cathode), 활물질(active material), 단입자(single particle), 양이온(cation), 도핑 (doping), 이차전지(secondary battery) |

**C.**     **DOCUMENTS CONSIDERED TO BE RELEVANT**

| Category* | Citation of document, with indication, where appropriate, of the relevant passages | Relevant to claim No. |
|---|---|---|
| X | KR 10-2022-0132491 A (LG ENERGY SOLUTION, LTD.) 30 September 2022 (2022-09-30)<br>See claims 1, 6, 7, 9, 10, 17 and 18. | 1-14 |
| A | KR 10-2023-0034556 A (POSCO HOLDINGS INC. et al.) 10 March 2023 (2023-03-10)<br>See claims 1, 4 and 7-9. | 1-14 |
| A | KR 10-2023-0048788 A (SK ON CO., LTD. et al.) 12 April 2023 (2023-04-12)<br>See claims 1 and 5. | 1-14 |
| A | KR 10-2023-0004114 A (LG ENERGY SOLUTION, LTD.) 06 January 2023 (2023-01-06)<br>See claims 1 and 3-5. | 1-14 |
| A | KR 10-2021-0064155 A (SAMSUNG SDI CO., LTD.) 02 June 2021 (2021-06-02)<br>See claims 1 and 8. | 1-14 |

| | | | |
|---|---|---|---|
| ✓ Further documents are listed in the continuation of Box C. | | ✓ See patent family annex. | |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 October 2024** | **07 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/008909** |

| C. | DOCUMENTS CONSIDERED TO BE RELEVANT | |
| --- | --- | --- |
| Category* | Citation of document, with indication, where appropriate, of the relevant passages | Relevant to claim No. |
| PX | KR 10-2024-0002815 A (LG CHEM, LTD.) 08 January 2024 (2024-01-08)<br>See claims 1-7, 19 and 20. | 1-14 |

Form PCT/ISA/210 (second sheet) (July 2022)

## INTERNATIONAL SEARCH REPORT
### Information on patent family members

International application No.

**PCT/KR2024/008909**

| Patent document cited in search report | | | Publication date (day/month/year) | Patent family member(s) | | | Publication date (day/month/year) |
|---|---|---|---|---|---|---|---|
| KR | 10-2022-0132491 | A | 30 September 2022 | CN | 111819718 | A | 23 October 2020 |
| | | | | CN | 118099413 | A | 28 May 2024 |
| | | | | EP | 3751646 | A1 | 16 December 2020 |
| | | | | EP | 3751646 | A4 | 21 April 2021 |
| | | | | EP | 3751646 | B1 | 24 April 2024 |
| | | | | EP | 4339164 | A2 | 20 March 2024 |
| | | | | EP | 4339164 | A3 | 12 June 2024 |
| | | | | JP | 2021-516424 | A | 01 July 2021 |
| | | | | JP | 7139008 | B2 | 20 September 2022 |
| | | | | KR | 10-2019-0131842 | A | 27 November 2019 |
| | | | | KR | 10-2539694 | B1 | 02 June 2023 |
| | | | | US | 2021-135187 | A1 | 06 May 2021 |
| | | | | WO | 2019-221497 | A1 | 21 November 2019 |
| KR | 10-2023-0034556 | A | 10 March 2023 | CN | 117916913 | A | 19 April 2024 |
| | | | | EP | 4398338 | A1 | 10 July 2024 |
| | | | | WO | 2023-033606 | A1 | 09 March 2023 |
| KR | 10-2023-0048788 | A | 12 April 2023 | US | 2023-0103968 | A1 | 06 April 2023 |
| KR | 10-2023-0004114 | A | 06 January 2023 | CN | 116250102 | A | 09 June 2023 |
| | | | | EP | 4199153 | A1 | 21 June 2023 |
| | | | | JP | 2023-542193 | A | 05 October 2023 |
| | | | | US | 2023-0378454 | A1 | 23 November 2023 |
| | | | | WO | 2023-277309 | A1 | 05 January 2023 |
| KR | 10-2021-0064155 | A | 02 June 2021 | CN | 110021738 | A | 16 July 2019 |
| | | | | CN | 110021738 | B | 22 November 2022 |
| | | | | KR | 10-2019-0085356 | A | 18 July 2019 |
| | | | | KR | 10-2342670 | B1 | 22 December 2021 |
| | | | | US | 11515524 | B2 | 29 November 2022 |
| | | | | US | 11949098 | B2 | 02 April 2024 |
| | | | | US | 2019-214639 | A1 | 11 July 2019 |
| | | | | US | 2022-367860 | A1 | 17 November 2022 |
| KR | 10-2024-0002815 | A | 08 January 2024 | WO | 2024-005553 | A1 | 04 January 2024 |

Form PCT/ISA/210 (patent family annex) (July 2022)